(19) Europäisches Patentamt
European Patent Office
Office européen des brevets

(11) **EP 4 568 406 A1**

(12) **EUROPEAN PATENT APPLICATION**
published in accordance with Art. 153(4) EPC

(43) Date of publication:
**11.06.2025 Bulletin 2025/24**

(21) Application number: **23870717.8**

(22) Date of filing: **25.09.2023**

(51) International Patent Classification (IPC):
***H04W 74/08*** *(2024.01)*

(52) Cooperative Patent Classification (CPC):
**H04L 5/00; H04W 72/044; H04W 74/08;**
**H04W 74/0833**

(86) International application number:
**PCT/CN2023/121115**

(87) International publication number:
**WO 2024/067486 (04.04.2024 Gazette 2024/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **29.09.2022 CN 202211201054**

(71) Applicant: **Huawei Technologies Co., Ltd.**
**Shenzhen, Guangdong 518129 (CN)**

(72) Inventors:
• **HAN, Chengcheng**
**Shenzhen, Guangdong 518129 (CN)**
• **GUO, Zhiheng**
**Shenzhen, Guangdong 518129 (CN)**
• **LONG, Yi**
**Shenzhen, Guangdong 518129 (CN)**
• **XIE, Xinqian**
**Shenzhen, Guangdong 518129 (CN)**

(74) Representative: **MERH-IP Matias Erny Reichl**
**Hoffmann**
**Patentanwälte PartG mbB**
**Paul-Heyse-Straße 29**
**80336 München (DE)**

(54) **COMMUNICATION METHOD AND COMMUNICATION APPARATUS**

(57)    A communication method and a communication apparatus are provided. The method includes: A terminal device receives random access signaling from a network device, where the random access signaling includes an initial received power at which the network device receives a random access preamble sequence; determines a total target received power of the network device based on the initial received power; and determines N transmit powers for N transmissions of the random access preamble sequence on M beams, where a sum of N first powers corresponding to the N transmit powers is not less than the total target received power, the N first powers are powers obtained by subtracting path losses from the N transmit powers, and signal reception strength on the M beams is not exactly the same, where M is an integer greater than or equal to 2, and N is greater than or equal to M. In consideration of a difference in signal reception strength on different beams, the random access preamble sequence is sent on the different beams by using different transmit powers, so that a success rate of receiving the random access preamble sequence by the network device can be increased, thereby ensuring that the terminal device successfully performs uplink synchronization.

FIG. 3

## Description

This application claims priority to Chinese Patent Application No. 202211201054.5, filed with the China National Intellectual Property Administration on September 29, 2022, and entitled "COMMUNICATION METHOD AND COMMUNICATION APPARATUS", which is incorporated herein by reference in its entirety.

## TECHNICAL FIELD

This application relates to the communication field, and more specifically, to a communication method, a communication apparatus, a computer-readable storage medium, a chip, and a computer program product.

## BACKGROUND

A terminal device in a communication system implements uplink synchronization through a random access procedure, to communicate with a network device. In the random access procedure, if the terminal device sends a random access preamble sequence by using only one random access channel occasion, due to a large loss and environmental susceptibility of high-frequency propagation, when the terminal device is far from the network device and/or an ambient environment is unfavorable to signal transmission, there is a high probability that a power at which the network device receives the random access preamble sequence is less than an expected value. Consequently, the terminal device cannot reliably access a network. Therefore, for a terminal device with a poor signal, for example, a terminal device located at a cell edge, a random access sequence may be sent for a plurality of times to compensate for a path loss caused by a long distance. In the current manner based on a plurality of times of sending, a same transmit power is used for each time of sending, without considering a difference between different transmissions. As a result, a combined power at the network device is still less than an expected value.

## SUMMARY

An example embodiment of this application provides a communication method, used by a terminal device to send a random access preamble sequence on a plurality of beams. Channel differences between different beams are considered, so that a power at which a network device receives the random access preamble sequence can be increased.
According to a first aspect, a communication method is provided. The method may be performed by a terminal device, or may be performed by a component (for example, a chip or a circuit) of the terminal device. This is not limited herein. The method is performed by the terminal device in the following description. The method includes: The terminal device receives random access signaling from a network device, where the received random access signaling includes an initial received power at which the network device receives a random access preamble sequence; the terminal device determines, based on the initial received power, a total target received power at which the network device receives the random access preamble sequence; and the terminal device determines N transmit powers for N transmissions of the random access preamble sequence on M beams, where the N transmit powers correspond to N first powers, the N first powers are determined based on the N transmit powers and path losses on the M beams, a sum of the N first powers is not less than the total target received power, the M beams include a first beam and a second beam, and signal reception strength of the terminal device on the first beam is different from signal reception strength of the terminal device on the second beam, where M is an integer greater than or equal to 2, and N is an integer greater than or equal to M.
In this way, the random access sequence is sent on two or more beams, so that a power at which the network device receives the random access preamble sequence can be increased, thereby avoiding an access failure of the terminal device due to a poor signal. In addition, in a case where the random access sequence is sent on a plurality of beams, when signal reception strength in the plurality of beams is different, the random access preamble sequence is sent on different beams using different transmit powers, so that a reception success rate of the network device can be increased, thereby ensuring that the terminal device can successfully perform uplink synchronization.
In some embodiments, the N first powers are obtained by subtracting path losses on the M beams from the N transmit powers.
In some embodiments, the method further includes: determining an equivalent transmission quantity on each of the M beams based on a transmission quantity on each of the M beams, where a sum of the transmission quantities on the M beams is N, and a sum of the equivalent transmission quantities on the M beams is less than N.
In this way, differences in signal reception strength on different beams can be normalized based on equivalent transmission quantities, so that a channel difference between the beams can be considered in a process of determining a transmit power on each beam.
In some embodiments, the determining N transmit powers for N transmissions of the random access preamble sequence includes: determining a first transmit power for a single transmission of the random access preamble sequence on the first beam based on the total target received power, a total equivalent transmission quantity on the M beams, a first equivalent transmission quantity on the first beam, and a path loss on the first beam; and determining a second transmit power for a single transmission of the random access preamble sequence on the second beam based on the first transmit power, a path loss on the second beam, a second equivalent transmission quantity on the second beam, and a transmission quantity on the second beam.

In this way, a transmit power on each beam is determined based on an equivalent transmission quantity, so that the transmit power on each beam can be configured differently. Further, it can be ensured that a combined power at the network device is not less than the total target received power.

In some embodiments, the method further includes: determining a strength ratio of signal reception strength on the second beam to signal reception strength on the first beam; and determining the second equivalent transmission quantity based on the transmission quantity on the second beam and the strength ratio.

In some embodiments, the determining N transmit powers for N transmissions of the random access preamble sequence includes: determining (K+1) beams and K beams in the M beams, where a sum of first powers on the K beams is less than the total target received power, and a sum of first powers on the (K+1) beams is greater than or equal to the total target received power, where the (K+1) beams are the first (K+1) beams in descending order of signal reception strength in the M beams, and the K beams are the first K beams in descending order of signal reception strength in the M beams, or the (K+1) beams are the first (K+1) beams in ascending order of signal reception strength in the M beams, and the K beams are the first K beams in ascending order of signal reception strength in the M beams; and a single transmit power on each of the K beams is a maximum transmit power of the terminal device, a first power on a $(K+1)^{th}$ beam is obtained by subtracting the first powers on the K beams from the total target received power, and the $(K+1)^{th}$ beam is a beam other than the K beams in the (K+1) beams.

In some embodiments, the method further includes determining a single transmit power on the $(K+1)^{th}$ beam based on the first power on the $(K+1)^{th}$ beam, a path loss on the $(K+1)^{th}$ beam, and a transmission quantity of the random access preamble sequence on the $(K+1)^{th}$ beam.

In this way, the K beams having high signal reception strength may use maximum transmit powers on the K beams, and a combined power on the (K+1) beams is not less than the total target received power. Because the beams having high signal reception strength are fully used, a transmit power of the terminal device can be minimized when the total target received power is met.

In this way, the K beams having low signal reception strength may use maximum transmit powers, and a combined power on the (K+1) beams is not less than the total target received power. In this case, when the total target received power is met, the maximum transmit powers on the beams are applied to weak beams, and powers on strong beams are reduced, so that a power on each random access channel occasion at the network device is almost equal, thereby preventing excessive interference power on any random access channel occasion. Because it can be ensured that the interference power is average as much as possible, mutual interference between terminal devices is reduced.

In some embodiments, the method further includes: The terminal device separately sends the random access preamble sequence on the M beams by using the N transmit powers.

In this way, the terminal device may implement a single transmission by sending the random access preamble sequence for a plurality of times.

According to a second aspect, a communication method is provided. The method may be performed by a network device, or may be performed by a component (for example, a chip or a circuit) of the network device. This is not limited herein. The method includes: The network device transmits random access signaling to a terminal device, where the random access signaling includes an initial received power at which the network device receives a random access preamble sequence; and the network device receives N transmissions of the random access preamble sequence on M beams from the terminal device, where M is an integer greater than or equal to 2, and N is an integer greater than or equal to M.

In some embodiments, the method further includes: The network device determines a combined power for the N transmissions, where the combined power is not less than a total target received power at which the network device receives the random access preamble sequence.

According to a third aspect, a communication apparatus is provided. The communication apparatus includes: a receiving module, configured to receive random access signaling from a network device, where the received random access signaling includes an initial received power at which the network device receives a random access preamble sequence; and a processing module, configured to determine, based on the initial received power, a total target received power at which the network device receives the random access preamble sequence. The processing module is further configured to determine N transmit powers for N transmissions of the random access preamble sequence on M beams, where the N transmit powers correspond to N first powers, the N first powers are obtained by the communication apparatus by subtracting path losses from the N transmit powers, a sum of the N first powers is not less than the total target received power, the M beams include a first beam and a second beam, and signal reception strength of the communication apparatus on the first beam is different from signal reception strength of the communication apparatus on the second beam, where M is an integer greater than or equal to 2, and N is an integer greater than or equal to M.

In some embodiments, the processing module is further configured to determine an equivalent transmission quantity on each of the M beams based on a transmission quantity on each of the M beams, where a sum of the transmission quantities on the M beams is N, and a sum of the equivalent transmission quantities on the M beams is less than N.

In some embodiments, the processing module is configured to determine a first transmit power for a single transmission of the random access preamble sequence on the first beam based on the total target received power, a total equivalent transmission quantity on the M beams, a first equivalent transmission quantity on the first beam, and a path loss on the first beam. The processing module is further configured to determine a second transmit power for a single transmission of the random access preamble sequence on the second beam based on the first transmit power, a path loss on the second beam, the first equivalent transmission quantity, a second equivalent transmission quantity on the second beam, and a transmission quantity on the second beam.

In some embodiments, the processing module is configured to: determine a strength ratio of signal reception strength on the second beam to signal reception strength on the first beam; and determine the second equivalent transmission quantity based on the transmission quantity on the second beam and the strength ratio.

In some embodiments, the processing module is configured to determine (K+1) beams and K beams in the M beams, where a sum of first powers on the K beams is less than the total target received power, and a sum of first powers on the (K+1) beams is greater than or equal to the total target received power, where the (K+1) beams are the first (K+1) beams in descending order of signal reception strength in the M beams, and the K beams are the first K beams in descending order of signal reception strength in the M beams, or the (K+1) beams are the first (K+1) beams in ascending order of signal reception strength in the M beams, and the K beams are the first K beams in ascending order of signal reception strength in the M beams; and a single transmit power on each of the K beams is a maximum transmit power of the apparatus, a first power on a $(K+1)^{th}$ beam is obtained by subtracting the first powers on the K beams from the total target received power, and the $(K+1)^{th}$ beam is a beam other than the K beams in the (K+1) beams.

In some embodiments, the processing module is configured to determine a single transmit power on the $(K+1)^{th}$ beam based on the first power on the $(K+1)^{th}$ beam, path losses on the (K+1) beams, and a transmission quantity of the random access preamble sequence on the $(K+1)^{th}$ beam.

In some embodiments, the apparatus may further include a sending module, configured to separately send the random access preamble sequence on the M beams by using the N transmit powers.

According to a fourth aspect, a communication apparatus is provided. The communication apparatus includes: a sending module, configured to send random access signaling to a terminal device, where the random access signaling includes an initial received power at which the communication apparatus receives a random access preamble sequence; and a receiving module, configured to receive N transmissions of the random access preamble sequence on M beams from the terminal device, where M is an integer greater than or equal to 2, and N is an integer greater than or equal to M.

In some embodiments, the communication apparatus further includes a processing module, configured to determine a combined power for the N transmissions, where the combined power is not less than a total target received power at which the apparatus receives the random access preamble sequence.

According to a fifth aspect, a communication apparatus is provided. The communication apparatus may be the terminal device in the foregoing method embodiments provided in the first aspect, or a chip applied to the terminal device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor enables, by using a logic circuit or by executing code instructions, the communication apparatus to perform the method performed by the terminal device in the foregoing method embodiments.

According to a sixth aspect, a communication apparatus is provided. The communication apparatus may be the network device in the foregoing method embodiments provided in the second aspect, or may be a chip applied to the network device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor enables, by using a logic circuit or by executing code instructions, the communication apparatus to perform the method performed by the network device in the foregoing method embodiments.

According to a seventh aspect, a computer-readable storage medium is provided. The computer-readable storage medium stores instructions. When the instructions are executed by a communication apparatus, the method performed by the terminal device in the first aspect is performed, or the method performed by the network device in the second aspect is performed.

According to an eighth aspect, a computer program product is provided. The computer program product includes a computer program. When the computer program is run, the method performed by the terminal device in the first aspect is performed, or the method performed by the network device in the second aspect is performed.

According to a ninth aspect, a chip system is provided. The chip system includes a processor, configured to implement functions of the terminal device in the method according to the first aspect, or configured to implement functions of the network device in the method according to the second aspect.

In a possible design, the chip system further includes a memory, configured to store program instructions and/or data. The chip system may include a chip, or may include a chip and another discrete component.

According to a tenth aspect, a communication system is provided. The communication system includes at least one communication apparatus according to the third aspect and at least one communication apparatus according to the fourth aspect.

According to an eleventh aspect, a communication method is provided. The communication method includes: A network device sends random access signaling to a terminal device, where the random access signaling includes an initial received power at which the network device receives a random access preamble sequence; the terminal device determines, based on the initial received power, a total target received power at which the network device receives the random access preamble sequence; and the terminal device determines N transmit powers for N transmissions of the random access preamble sequence on M beams, where the N transmit powers correspond to N first powers, the N first powers are obtained by the terminal device by subtracting path losses from the N transmit powers, a sum of the N first powers is not less than the total target received power, the M beams include a first beam and a second beam, and signal reception strength of the terminal device on the first beam is different from signal reception strength of the terminal device on the second beam, where M is an integer greater than or equal to 2, and N is an integer greater than or equal to M.

## BRIEF DESCRIPTION OF DRAWINGS

FIG. 1 is an example flowchart of a contention-based random access procedure;
FIG. 2 is a diagram of an application scenario according to an embodiment of this application;
FIG. 3 is a diagram of interaction in a communication process according to some embodiments of this application;
FIG. 4 is a diagram of power allocation according to some embodiments of this application;
FIG. 5 is another diagram of power allocation according to some embodiments of this application;
FIG. 6 is still another diagram of power allocation according to some embodiments of this application;
FIG. 7 is a block diagram of a communication apparatus according to some embodiments of this application;
FIG. 8 is a block diagram of a communication apparatus according to some embodiments of this application; and
FIG. 9 is a block diagram of an example device that can be configured to implement an embodiment of this application.

## DESCRIPTION OF EMBODIMENTS

The following describes embodiments of this application in more detail with reference to the accompanying drawings. Although some embodiments of this application are shown in the accompanying drawings, it should be understood that this application can be implemented in various forms and should not be construed as being limited to embodiments described herein, and instead, these embodiments are provided for a more thorough and complete understanding of this application. It should be understood that, the accompanying drawings and embodiments of this application are merely used as examples, and are not intended to limit the protection scope of this application.

In the descriptions of embodiments of this application, the term "include" and similar terms thereof should be understood as open inclusion, that is, "include but not limited to". The term "based on" should be understood as "at least partially based on". The term "one embodiment" or "this embodiment" should be understood as "at least one embodiment". The terms "first", "second", and the like may indicate different objects or a same object. The following may further include other explicit and implied definitions.

Embodiments of this application may be implemented according to any appropriate communication protocol, including but not limited to cellular communication protocols such as 3rd generation (3rd Generation, 3G), 4th generation (4G), 5th generation (5G), and 6th generation (6G), wireless local area network communication protocols such as the Institute of Electrical and Electronics Engineers (Institute of Electrical and Electronics Engineers, IEEE) 802.11, and/or any other protocols currently known or developed in the future.

Technical solutions in embodiments of this application are applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications system (Universal Mobile Telecommunications System, UMTS), a long term evolution (Long Term Evolution, LTE) system, a wideband code division multiple access (Wideband Code Division Multiple Access, WCDMA) system, a code division multiple access 2000 (Code Division Multiple Access, CDMA2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation system or a new radio (New Radio, NR) system, or a future evolved 6th generation communication system.

A radio access network device, or a network device, may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation NodeB in a 6th generation (6th generation, 6G) mobile communication system, a base station in a future mobile communication system, an access node in a Wi-Fi system, or the like; or may be a module or unit that implements a part of functions of the base station, for example, may be a central unit (central unit, CU) or a distributed unit (distributed unit, DU). The CU herein implements functions of a radio resource control protocol and a packet data convergence protocol (packet data convergence protocol, PDCP) of the base station, and may further implement functions of a service data adaptation protocol (service data adaptation protocol, SDAP). The DU implements functions of a radio link control layer and a medium access control (medium access control, MAC) layer of the base station, and may further implement some or all functions of a physical layer. For specific descriptions of the foregoing protocol layers, refer to related technical specifications of the 3rd generation partnership project (3rd generation partnership project, 3GPP). The radio access network device may be a macro base station, may be a micro base station or an indoor base station, or may be a relay node, a donor node, or the like. A specific technology and a specific device form that are used by the radio access network device are not limited in embodiments of this application. For ease of description, the following provides descriptions by using an example in which the radio access network device is a base station.

A terminal may also be referred to as a terminal device (terminal device), user equipment (user equipment, UE), a mobile station, a mobile terminal, or the like. The terminal may be a mobile phone, a tablet computer, a computer having a wireless transceiver function, a wearable device, a vehicle, an uncrewed aerial vehicle, a helicopter, an aircraft, a ship, a robot, a robotic arm, a smart home device, a wireless modem (modem), a computing device, another processing device connected to a wireless modem, an augmented reality (augmented reality, AR) device, a virtual reality (virtual reality, VR) device, an artificial intelligence (artificial intelligence, AI) device, or the like. The terminal may further include a subscriber unit (subscriber unit), a cellular phone (cellular phone), a smartphone (smartphone), a wireless data card, a personal digital assistant (personal digital assistant, PDA) computer, a tablet computer, a netbook computer, a handheld (handheld) device, a laptop computer (laptop computer), a cordless phone (cordless phone), a wireless local loop (wireless local loop, WLL) station, a machine type communication (machine type communication, MTC) terminal, relay user equipment, or the like. The relay user equipment may be, for example, a residential gateway (residential gateway, RG). For ease of description, in this application, the devices mentioned above are collectively referred to as terminals.

The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, self-driving, telemedicine, a smart grid, smart furniture, smart office, smart wearable, smart transportation, and a smart city.

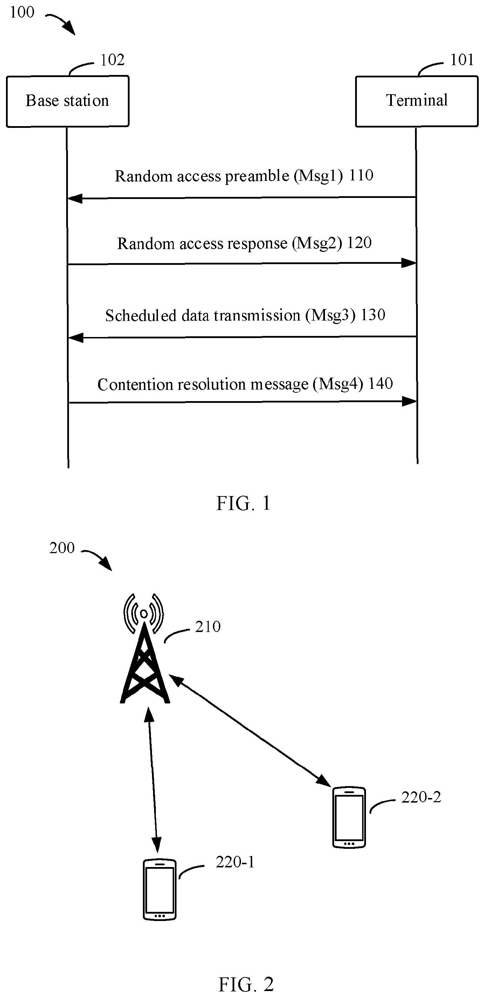

The terminal implements uplink synchronization through a random access procedure, to access a network for communication. Random access may include contention-based random access and non-contention-based random access. Non-contention-based random access is usually performed when the terminal can successfully receive radio resource control (radio resource control, RRC) signaling. An example procedure of a contention-based random access procedure is shown in FIG. 1. FIG. 1 is a diagram of interaction in a contention-based random access procedure 100, which relates to a terminal 101 and a base station 102.

Refer to FIG. 1. The terminal 101 sends a random access preamble 110, that is, a message 1 (Msg1), to the base station 102. For example, the terminal 101 randomly selects, based on a system message from the base station 102 and a selected synchronization signal and PBCH block (Synchronization Signal and PBCH Block, SSB) index, a random access channel occasion (RACH occasion, RO) in ROs associated with the SSB index, to send the preamble. The RO may be understood as a time-frequency resource used by the terminal 101 for random access. After determining the RO, the terminal 101 may send the random access preamble sequence on the selected RO. It should be noted that, unless otherwise specified, the preamble and the random access preamble sequence in this specification can be used interchangeably. This is not limited in this application.

A transmit power used by the terminal 101 to send the random access preamble sequence may be represented as the following equation (1):

$$P_{PRACH} = \min\{P_{CMAX,c}(i), \text{PREAMBLE\_}RECEIVED\_TARGET\_POWER + PL_c\} \text{ [dBm]} \quad (1)$$

In equation (1), $P_{CMAX,c}(i)$ represents a maximum transmit power of the terminal 101 on a transmission occasion i of a serving cell c, and may be simply represented as $P_{CMAX}$. The base station 102 may configure a value range of the maximum transmit power for the terminal 101. Generally, the terminal 101 may set the maximum transmit power to 23 dBm.

In equation (1), *PREAMBLE_RECEIVED_TARGET_POWER* represents a target power threshold required by the base station 102 to decode the random access preamble sequence. In equation (1), $PL_c$ represents an estimated path loss, and may be determined by the terminal 101 through calculation and estimation based on a reference signal received power (Reference Signal Received Power, RSRP) of a downlink SSB signal. Specifically, the terminal 101 may compare a measured RSRP of an SSB received on a downlink channel with a known RSRP (for example, broadcast by the base station 102), and determine the estimated path loss through filtering. In this application, the estimated path loss may also be referred to as a path attenuation, a path loss, or another name. This is not limited in this application.

The base station 102 sends a random access response (Random access response, RAR) 120, that is, message 2 (Msg2), to the terminal 101. Specifically, after receiving the random access preamble sequence, the base station 102 may allocate a time-frequency resource of Msg2, scheduling information of Msg3, and the like to the terminal 101. Optionally, Msg2 (that is, the RAR) may include the scheduling information of Msg3, for example, RAR uplink grant information.

The terminal 101 sends a scheduled data transmission 130, that is, message 3 (Msg3), to the base station 102. For example, Msg3 may be sent on the time-frequency resource specified by Msg2, and Msg3 is carried on a physical uplink shared channel (PUSCH).

The base station 102 sends a contention resolution message 140, that is, message 4 (Msg4), to the terminal 101. For example, Msg4 is mainly used for conflict resolution. When a plurality of different terminals attempt to access the base station at the same time, the base station 102 needs to determine which terminal to select for random access.

In addition, during uplink transmission of the terminal 101, using an uplink power control technology can improve coverage performance to provide good user experience. For example, because terminals are at different distances from the base station 102, path losses experienced by the terminals vary greatly. Generally, terminals (center users) closer to the base station 102 experience smaller path losses, and terminals (edge users) farther from the base station 102 experience larger path losses. Therefore, to provide good user experience for the edge users, these terminals usually perform uplink transmissions by using transmit powers larger than transmit powers of the center users, to compensate for path losses caused by the long-distance transmissions, so that good transmission performance, that is, a high transmission rate, can be provided for the edge users. Such a mechanism, in which different uplink transmit powers are used for the center user and the edge user, is implemented by using the uplink power control technology. However, a power used by the terminal for uplink transmission cannot exceed a maximum output power (Maximum Output Power, MOP) of the terminal. The maximum output power is, for example, the maximum transmit power $P_{CMAX,c}(i)$ in the foregoing equation (1).

As described above, if the terminal 101 sends the random access preamble sequence by using only one RO, because the transmission is vulnerable to an environment, when the terminal 101 is far away from the base station 102 and/or an ambient environment is unfavorable for the transmission, a power at which the base station 102 receives the random access preamble sequence is probably less than an expected value. Consequently, the terminal 101 cannot reliably access the base station 102. Especially in a random access procedure of millimeter-wave communication, because a millimeter-wave propagation loss is large, an access failure of the terminal 101 is more likely to occur.

In view of this, an embodiment of this application provides a solution for sending a random access preamble sequence. A terminal may perform uplink transmission through a plurality of transmissions of the random access preamble sequence on at least two beams, and a sum of a plurality of first powers corresponding to a plurality of transmit powers for the plurality of transmissions meets a total target received power of a base station. In this way, a coverage capability can be improved, and a reception success rate of the base station can be increased.

FIG. 2 is a diagram of a system 200 in which an embodiment of this application can be implemented. The system 200 includes a base station 210, and a terminal 220-1 and a terminal 220-2 (which are respectively or collectively referred to as a terminal 220). The base station 210 and the terminal 220 can communicate with each other. For example, the base station 210 can provide a network access service for the terminal 220.

In this embodiment of this application, a transmission link from the base station 210 to the terminal 220 may be referred to as a downlink (Downlink, DL), and a transmission link from the terminal 220 to the base station 210 may be referred to as an uplink (Uplink, UL). For example, the base station 210 may send downlink signaling to the terminal 220, to indicate an uplink resource, an adjustment action, and the like.

It should be understood that the system 100 shown in FIG. 2 is merely an example. This embodiment of this application may be further applied to another scenario. For example, the terminal 220 may directly communicate with the base station 210, or may perform multi-hop transmission through another relay (relay). For example, the terminal 220 may be in a dual-connectivity or multi-connectivity scenario. In addition, it should be understood that, although two terminals 220 are shown in the scenario shown in FIG. 2, this is not limited in this embodiment of this application. For example, the system 100 may include more or fewer terminals.

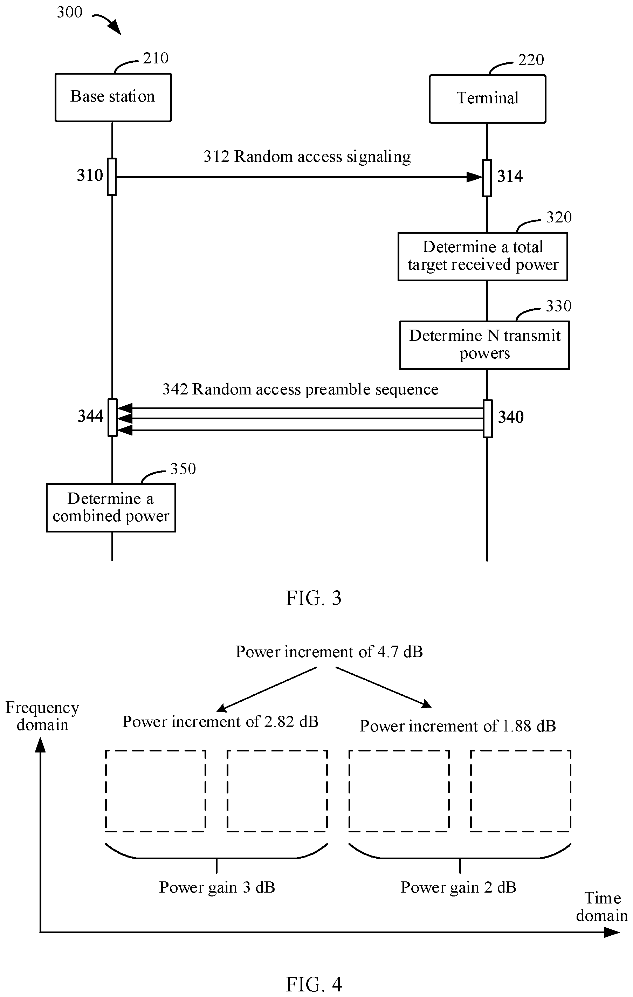

FIG. 3 is a schematic flowchart of interaction in a communication process 300 according to some embodiments of this application. FIG. 3 relates to a base station 210 and a terminal 220.

312: The base station 210 sends (310) random access signaling to the terminal 220. Correspondingly, it may be understood that the terminal 220 receives (314) the random access signaling 312.

Specifically, the random access signaling may include an initial received power at which the base station 210 receives a random access preamble sequence. For example, the initial received power may be represented as preambleInitialReceivedTargetPower. Optionally, the random access signaling may be physical random access channel (physical random access channel, PRACH) indication information.

320: The terminal 220 determines a total target received power of the base station 210 based on the random access signaling.

In an optional implementation, the terminal 220 may determine a target received power based on the initial received power, a retransmission quantity, and a power ramping step during retransmissions. For example, the retransmission quantity may indicate a sequence number of a specific retransmission process in all retransmissions, and the retransmission quantity may be determined based on a counter for transmissions of the random access preamble sequence (PREAMBLE_TRANSMISSION_COUNTER). For example, the total target received power may be represented as PREAMBLE_RECEIVED_TARGET_POWER, and the power ramping step may be represented as powerRampingStep. In this case, the total target received power may be determined through the following equation (2).

$$\text{PREAMBLE\_RECEIVED\_TARGET\_POWER} = \text{preambleInitialReceivedTargetPower} + \text{DELTA\_PREAMBLE} + (\text{PREAMBLE\_TRANSMISSION\_COUNTER-1}) \times \text{powerRampingStep} \tag{2}$$

In equation (2), DELTA_PREAMBLE represents an increment.

330: The terminal 220 determines N transmit powers for N transmissions of the random access preamble sequence on M beams.

Specifically, the N transmit powers are in one-to-one correspondence with the N transmissions. The N transmit powers correspond to N first powers, and a sum of the N first powers is not less than the total target received power. The N first powers may be obtained by the terminal 220 by subtracting path losses from the N transmit powers. Optionally, the N first powers may correspond to N received powers at which the base station 210 receives the random access preamble sequence, and the sum of the N first powers may correspond to a combined power at which the base station 210 receives the random access preamble sequence.

It may be understood that transmission quantities on different beams may be the same or may be different. For example, if at least two beams include a first beam and a second beam, a transmission quantity of the random access preamble sequence on the first beam is N1, and a transmission quantity of the random access preamble sequence on the second beam is N2, N1 may be equal to or not equal to N2.

In an optional implementation, channel conditions of the M beams are not totally the same. Optionally, the channel condition is signal reception strength. In other words, signal reception strength in the M beams is not totally the same. For example, the M beams include a first beam and a second beam, and signal reception strength of the terminal 220 on the first beam is different from signal reception strength of the terminal 220 on the second beam. M is an integer greater than or equal to 2, and N is an integer less than or equal to M. Further, optionally, the signal reception strength is an RSRP.

For ease of description, a transmission quantity of the random access preamble sequence on an $i^{th}$ beam in the M beams is represented as Ni, where i is any value from 1 to M. In other words, transmission quantities of the random access preamble sequence on the M beams are represented as N1 to Nm, respectively. For the $i^{th}$ beam, a transmit power for each of the Ni transmissions on the $i^{th}$ beam is the same. In the following, unless otherwise specified, the transmit power on the $i^{th}$ beam is a transmit power for a single transmission on the $i^{th}$ beam, that is, a single transmit power.

In other words, a transmit power for each transmission on one beam is the same. The $i^{th}$ beam in the M beams is used as an example. A transmit power (for example, Pi) on the $i^{th}$ beam may be determined. In this case, a transmit power for each of the Ni transmissions on the $i^{th}$ beam is Pi.

In some implementations, the terminal 220 may determine an equivalent transmission quantity based on a channel condition difference between the M beams, and determine a single transmit power on each beam based on the equivalent transmission quantity.

In some embodiments, the terminal 220 may determine an equivalent transmission quantity on each beam based on a transmission quantity on each beam. In an optional implementation, one of the M beams may be used as a reference beam, an equivalent transmission quantity on the reference beam may be determined, and an equivalent transmission quantity on another beam may be determined based on a channel condition difference between the another beam and the reference beam. For example, the first beam and the second beam in the M beams are used as an example. The terminal 220 may determine an equivalent transmission quantity on the first beam, and determine a second equivalent transmission quantity on the second beam based on a channel condition difference between the second beam and the first beam and a transmission quantity on the second beam, where the second beam may be any one of the M beams except the first beam.

If the first beam is used as a reference beam, the first equivalent transmission quantity on the first beam is equal to the transmission quantity on the first beam, or it may be understood that there is no need to determine the equivalent transmission quantity on the first beam, and an actual transmission quantity on the first beam is used as the first equivalent transmission quantity. For example, when the transmission quantity on the first beam is N1, the first equivalent transmission quantity is N1. For example, the first beam may be a beam having the highest signal reception strength in the M beams. In other words, the first beam may be a beam having the best transmission condition in the M beams. In an optional implementation, when the first beam is a reference beam, the terminal may determine the second equivalent transmission quantity on the second beam based on a strength ratio of the signal reception strength on the second beam to the signal reception strength on the first beam and the transmission quantity on the second beam. Optionally, the second equivalent transmission quantity is less than the transmission quantity on the second beam. For example, it is assumed that the signal reception strength on the first beam is S1, the signal reception strength on the second beam is S2, and S2/S1 is equal to 0.5, it can be determined that the strength ratio is 0.5. It is assumed that the transmission quantity on the second beam (for example, also referred to as a second transmission quantity) is N2, it may be determined that the second equivalent transmission quantity is a product of the strength ratio and the transmission quantity on the second beam, that is, $0.5 \times N2$. In this way, an equivalent transmission quantity on each beam may be determined, and a sum of equivalent transmission quantities on all beams is less than N. For example, a total equivalent transmission quantity may be represented as numRepetitionPerPreambleAttempt_eq.

In some embodiments, the terminal 220 may determine the single transmit power on each beam based on the total target received power, the total equivalent transmission quantity, the equivalent transmission quantity on each beam, and a path loss on each beam.

For example, a first transmit power on the first beam may be determined based on the total target received power and the total equivalent transmission quantity, where the first transmit power is a single transmit power for the random access preamble sequence on the first beam. Specifically, a single target received power on the first beam may be determined based on the total target received power and the total equivalent transmission quantity, and the first transmit power on the first beam may be determined based on the single target received power on the first beam, a maximum transmit power, and a path loss on the first beam. Optionally, the single target received power on the first beam may be a first power corresponding to the first transmit power.

As described above, the target received power may be represented as PREAMBLE_RECEIVED_TARGET_POWER, and the total equivalent transmission quantity may be represented as numRepetitionPerPreambleAttempt_eq. In this case, the single target received power on the first beam may be determined through the following equation (3), where the single target received power on the first beam is represented as PREAMBLE_RECEIVED_TARGET_POWER_1.

PREAMBLE_RECEIVED_TARGET_POWER_1 --> = PREAMBLE_RECEIVED_TARGET_POWER - 10 × log10(numRepetitionPerPreambleAttempt_eq) (3)

Further, it is assumed that the maximum transmit power is represented as $P_{CMAX}$, and the path loss on the first beam is represented as $PL_{C1}$. In this case, the first transmit power (represented as P1) on the first beam may be determined through the following equation (4):

$$P1 = MIN\{P_{CMAX}, PREAMBLE\_RECEIVED\_TARGET\_POWER\_1 + PL_{C1}\} \qquad (4)$$

For example, a second transmit power on the second beam may be determined based on the first transmit power, the first equivalent transmission quantity, the second equivalent transmission quantity, a first transmission quantity, and the second transmission quantity, where the second transmit power is a single transmit power for the random access preamble sequence on the second beam. It may be understood that the second beam may be any one of the M beams other than the first beam. Specifically, the single target received power on the second beam (represented as PREAMBLE_RECEIVED_TARGET_POWER_2) may be determined based on a ratio of the second equivalent transmission quantity to the first equivalent transmission quantity, a ratio of the second transmission quantity to the first transmission quantity, and the single target received power on the first beam (PREAMBLE_RECEIVED_TARGET_POWER_1), and the second transmit power on the second beam is determined based on the single target received power on the second beam, the maximum transmit power, and a path loss on the second beam. Optionally, the single target received power on the second beam may be a first power corresponding to the second transmit power.

For example, it is assumed that the first equivalent transmission quantity is represented as num_eq_1, and the second equivalent transmission quantity is represented as num_eq_2. In this case, the single target received power on the second beam may be determined through equation (5):

PREAMBLE_RECEIVED_TARGET_POWER_2 = PREAMBLE_RECEIVED_TARGET_POWER_1 × (num_eq_2/num_eq_1) × (N2/N1)  (5)

Further, it is assumed that the maximum transmit power is represented as $P_{CMAX}$, and the path loss on the second beam is represented as $PL_{C2}$. In this case, the second transmit power (represented as P2) on the second beam may be determined through the following equation (6):

$$P2 = MIN\{P_{CMAX}, PREAMBLE\_RECEIVED\_TARGET\_POWER\_2 + PL_{C2}\} \quad (6)$$

It may be understood that P1 represents a transmit power for a single transmission on the first beam, and P2 represents a transmit power for a single transmission on the second beam. In addition, it should be noted that, although the foregoing describes an example of determining a transmit power on each beam based on an equivalent transmission quantity with reference to equation (3) to equation (6), this application is not limited thereto. For example, the single target received power on the second beam may be determined based on a normalized value (for example, the strength ratio) of a received signal power on the second beam relative to a received signal power on the first beam. This is not limited in this application.

In this way, the transmit power on each beam can be determined based on a difference between signal received powers on different beams, and it can be ensured that the sum of the N first powers meets the total target received power, where the sum of the N first powers may correspond to a combined power at the base station 210. Two beams (M = 2) are used as an example. For example, a 1st beam may be based on an SSB 1, and a 2nd beam may be based on an SSB 2. FIG. 4 is a diagram of power allocation on two beams, where a transmission quantity on each beam is 2, that is, N1 = N2 = 2, and N = 4. It may be learned from FIG. 4 that a power increment required for four transmissions on the two beams is 2.82 dB + 1.88 dB = 4.7 dB, and a power gain that can be implemented on the two beams is 3 dB + 2 dB = 5 dB. Because 3 dB > 2.82 dB, 2 dB > 1.88 dB, and 5 dB > 4.7 dB, the required power increase can be met through this solution, thereby ensuring that the combined power meets the total target received power.

In some implementations of this embodiment of this application, the terminal 220 can determine (K+1) beams in the M beams, use maximum transmit powers on K beams in the (K+1) beams, and perform power compensation on a (K+1)th beam, so that the sum of the N first powers corresponding to the N transmit powers is not less than the total target received power. It may be understood that K is a positive integer less than M.

In some embodiments, the terminal 220 can determine the (K+1) beams, and a single transmit power on each of the K beams in the (K+1) beams is a maximum transmit power of the terminal 220. The (K+1) beams are the first (K+1) beams in descending order of signal reception strength in the M beams, and the K beams are the first K beams in descending order of signal reception strength in the M beams; or the (K+1) beams are the first (K+1) beams in ascending order of signal reception strength in the M beams, and the K beams are the first K beams in ascending order of signal reception strength in the M beams. A sum of first powers on the K beams is less than the total target received power, and a sum of first powers on the (K+1) beams is greater than or equal to the total target received power. Then, a first power on a (K+1)th beam in the (K+1) beams but not in the K beams may be determined based on the total target received power and the first powers on the K beams.

For example, the terminal 220 may rank the M beams based on the signal reception strength, for example, may rank the M beams in ascending or descending order of signal reception strength, to obtain the ranked M beams. The terminal 220 may determine that single transmit powers on the first K beams in the ranked M beams are maximum transmit powers. For example, K may be determined based on the following criteria: Using the maximum transmit powers on the first (K+1) beams will result in the combined power being not less than the total target received power, and using the maximum transmit powers on the first K beams will result in the combined power being less than the total target received power. The terminal 220 may determine a transmit power on the (K+1)th beam in the ranked M beams based on the total target received power, K maximum transmit powers on the K beams, K path losses corresponding to the K beams, and a path loss on the (K+1)th beam.

Specifically, the first power on the (K+1)th beam may be determined based on the total target received power, the K maximum transmit powers on the K beams, a path loss on each of the K beams, and a transmission quantity on each of the K beams. A single transmit power on the (K+1)th beam may be determined based on the first power on the (K+1)th beam, a transmission quantity on the (K+1)th beam, and path losses on the (K+1) beams.

In some examples of this application, it is assumed that the M beams are ranked in descending order of signal reception strength. In other words, the first K beams in the ranked M beams correspond to beams with good channel conditions. In this way, maximum transmit powers (also referred to as full powers) are used on the K beams with good channel conditions, and the transmit power on the (K+1)th beam is adjusted to meet that a sum of (K+1) first powers (the combined power) corresponding to the (K+1) transmit powers is not less than the total target received power. In this case, when the total power is fixed, the base station 210 can determine a maximum received power. On the contrary, when the total target received power is given, it can be ensured that an overall transmit power at the terminal 220 is minimum.

For brevity of description, two beams are used as an example. It is assumed that there are a first beam and a second beam, and signal reception strength on the first beam is greater than signal reception strength on the second beam. The first beam may be understood as a "better beam", and the second beam may be understood as a "worse beam". In addition, it is assumed that the N transmissions include N1 transmissions on the first beam (for example, N1 is referred to as a first transmission quantity) and N2 transmissions on the second beam (for example, N2 is referred to as a second transmission quantity), and N1 + N2 = N. In this example, it may be understood that M = 2 and K = 1.

The terminal 220 may determine, as the maximum transmit power ($P_{CMAX}$), a first transmit power (represented as P1) for a single transmission of the random access preamble sequence on the first beam. For example, the terminal 220 may determine a total first power on the second beam based on the total target received power (PREAMBLE_RECEIVED_TARGET_POWER), a path loss (represented as $PL_{C1}$) on the first beam, and the transmission quantity (N1) on the first beam. Then, a second transmit power on the second beam may be determined based on the maximum transmit power, the transmission quantity (N2) on the second beam, and the total first power on the second beam.

For example, the total first power on the second beam may be determined through the following equation (7), where the total first power on the second beam represents a total first power for N2 transmissions on the second beam.

$$\text{PREAMBLE\_RECEIVED\_TARGET\_POWER\_2\_total = PREAMBLE\_RECEIVED\_TARGET\_POWER - } (P_{CMAX} - PL_{C1}) - 10 \times \log10(N1) \tag{7}$$

Subsequently, a single target received power (that is, a first power corresponding to a single transmission on the second beam) on the second beam may be determined based on the total first power on the second beam and the transmission quantity (N2) on the second beam, as shown in equation (8), where the single target received power on the second beam may be represented as PREAMBLE_RECEIVED_TARGET_POWER_2.

$$\text{PREAMBLE\_RECEIVED\_TARGET\_POWER\_2 = PREAMBLE\_RECEIVED\_TARGET\_POWER\_2\_total - 10 \times } \log10(N2) \tag{8}$$

Further, a second transmit power (denoted as P2) may be determined based on the maximum transmit power, the single target received power on the second beam, and the path loss on the second beam:

$$P2 = MIN\{P_{CMAX}, \text{ PREAMBLE\_RECEIVED\_TARGET\_POWER\_2} + PL_{C2}\} \tag{9}$$

It may be understood that P1 represents a transmit power for a single transmission on the first beam, and P2 represents a transmit power for a single transmission on the second beam. In addition, it should be noted that, although the foregoing describes, with reference to equation (7) to equation (9), an example of determining a transmit power when there are two beams, it may be understood that a case of more beams is similar, and is not listed herein one by one.

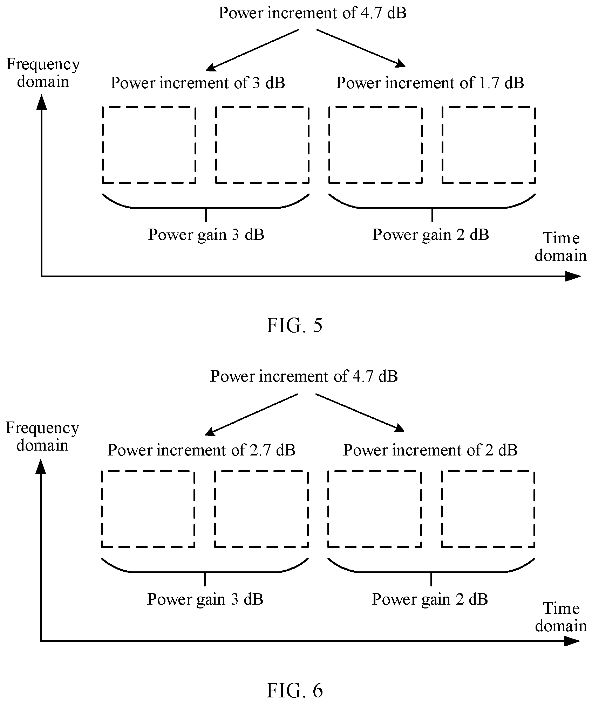

In this way, it can be determined to use the maximum transmit powers on the K different beams with good channel conditions, and perform power adjustment on, for example, the $(K+1)^{th}$ beam. This ensures that the combined power meets the total target received power. Two beams (M = 2) are used as an example. For example, a $1^{st}$ beam may be based on an SSB 1, and a $2^{nd}$ beam may be based on an SSB 2. FIG. 5 is a diagram of power allocation on two beams, where a transmission quantity on each beam is 2, that is, N1 = N2 = 2, and N = 4. It may be learned from FIG. 5 that a power increment required for four transmissions on the two beams is 3 dB + 1.7 dB = 4.7 dB, and a power gain that can be implemented on the two beams is 3 dB + 2 dB = 5 dB. Because 3 dB ≥ 3 dB, 2 dB > 1.7 dB, and 5 dB > 4.7 dB, the required power increase can be met through this solution, thereby ensuring that the combined power meets the total target received power.

In some examples of this application, it is assumed that the M beams are ranked in ascending order of signal reception strength. In other words, the first K beams in the ranked M beams correspond to beams with poor channel conditions. In this way, maximum transmit powers (also referred to as full powers) may be used on the K beams with poor channel conditions, and a transmit power on the $(K+1)^{th}$ beam is adjusted to meet that the combined power is not less than the total target received power. In this case, it can be ensured that the interference power is averaged as much as possible, and the interference power is consistent as much as possible at different transmission occasions, to reduce the impact of interference, for example, to minimize the detection interference to other terminals occupying the same RO.

For brevity of description, two beams are used as an example. It is assumed that there are a first beam and a second beam, and signal reception strength on the first beam is greater than signal reception strength on the second beam. The first beam may be understood as a "better beam", and the second beam may be understood as a "worse beam". In addition, it is assumed that the N transmissions include N1 transmissions on the first beam (for example, N1 is referred to as a first transmission quantity) and N2 transmissions on the second beam (for example, N2 is referred to as a second transmission quantity), and N1 + N2 = N. In addition, it is assumed that the N transmissions include N1 transmissions on the first beam and N2 transmissions on the second beam, and N1 + N2 = N. In this example, it may be understood that M = 2 and K = 1.

The terminal 220 may determine, as the maximum transmit power ($P_{CMAX}$), a second transmit power (represented as P2) for a transmission of the random access preamble sequence on the second beam. For example, the terminal 220 may determine the first transmit power on the first beam based on the total target received power (PREAMBLE_RECEIVED_TARGET_POWER), the maximum transmit power, the path loss (represented as $PL_{C2}$) of the second beam, a total transmission quantity (N), and the transmission quantity (N1) on the first beam.

Optionally, the terminal 220 may determine a second predetermined transmit power on the second beam based on the total target received power, the path loss on the second beam, and the total transmission quantity (N). For example, the second predetermined transmit power may be represented as PREAMBLE_RECEIVED_TARGET_POWER - 10 × log10(N) + $PL_{C2}$. The terminal 220 may determine a first predetermined transmit power on the first beam based on the total target received power, the path loss on the first beam, and the total transmission quantity (N). For example, the first predetermined transmit power may be represented as PREAMBLE_RECEIVED_TARGET_POWER - 10 × log10(N) + $PL_{C1}$.

The terminal 220 may determine a relationship between the second predetermined transmit power and the maximum transmit power on the second beam. In an example, the second predetermined transmit power does not exceed the maximum transmit power. In this example, the terminal 220 may use the second predetermined transmit power on the second beam.

In another example, the second predetermined transmit power exceeds the maximum transmit power. In this example, the terminal 220 may use the maximum transmit power on the second beam. Further, the terminal 220 may determine a first power on the second beam corresponding to the maximum transmit power on the second beam, and obtain a power difference (for example, represented as delta_POWER) based on a difference between the total target received power and the first power on the second beam. Further, the first transmit power (P1) may be determined based on the maximum transmit power, the first predetermined transmit power, the power difference, and the first transmission quantity. For example, the first transmit power (P1) may be represented as the following equation (10):

$$P1 = MIN\{P_{CMAX}, \text{PREAMBLE\_RECEIVED\_TARGET\_POWER} - 10 \times log10(N) + PL_{C1} + \text{delta\_POWER-10} \times log10(N1)\} \qquad (10)$$

It may be understood that P1 represents a transmit power for a single transmission on the first beam, and P2 represents a transmit power for a single transmission on the second beam. In addition, it should be noted that, although the foregoing describes, with reference to equation (10), an example of determining a transmit power when there are two beams, it may be understood that a case of more beams is similar, and is not listed herein one by one.

In this way, it can be determined to use the maximum transmit powers on the K different beams with poor channel conditions, and perform power adjustment on, for example, the (K+1)th beam, to ensure that the combined power meets the total target received power. Two beams (M = 2) are used as an example. For example, a 1st beam may be based on an SSB 1, and a 2nd beam may be based on an SSB 2. FIG. 6 is a diagram of power allocation on two beams, where a transmission quantity on each beam is 2, that is, N1 = N2 = 2, and N = 4. It may be learned from FIG. 6 that a power increment required for four transmissions on the two beams is 2.7 dB + 2 dB = 4.7 dB, and a power gain that can be implemented on the two beams is 3 dB + 2 dB = 5 dB. Because 3 dB > 2.7 dB, 2 dB ≥ 2 dB and 5 dB > 4.7 dB, the required power increase can be met through this solution, thereby ensuring that the combined power meets the total target received power.

342: The terminal 220 sends (340) the random access preamble sequence to the base station 210 on the at least two beams. Correspondingly, the base station 210 receives (344) the random access preamble sequence.

Specifically, the terminal 220 may perform N transmissions by using N transmit powers, and send the random access preamble sequence on a corresponding beam in each transmission. Specifically, the base station 210 may receive N transmissions.

350: The base station 210 determines a combined power, for example, considers N transmissions as a retransmission process. In other words, the base station 210 considers the N transmissions as one transmission from the terminal 220. In this embodiment of this application, the combined power is not less than the total target received power of the base station 210.

Optionally, the base station 210 may determine the combined power based on the channel state using a maximum-ratio combiner (maximum-ratio combiner, MRC), where a combination weighting factor may be equal to an amplitude square of a channel coefficient. Optionally, the base station 210 may directly add up all powers to obtain the combined power. It may be understood that the base station 210 may alternatively obtain the combined power in another manner. This is not limited in this application.

It should be noted that the term "combined power" refers to a combined power determined by the base station 210 based on N transmissions of the received random access preamble sequence. At the terminal 220, the terminal 220 may determine N first powers corresponding to the N transmit powers, and the terminal 220 may consider a sum of the N first powers as a combined power to be determined by the base station 210.

In this way, in this embodiment of this application, a channel difference between different beams is considered, and different transmit powers are used on different beams to send the random access preamble sequence. In this case, a power at which the base station receives the random access preamble sequence can be increased, and a success rate of receiving the random access preamble sequence by the base station can be increased, thereby ensuring that the terminal can successfully perform uplink synchronization.

It should be further understood that division into the manners, cases, categories, and embodiments in embodiments of this application is merely for ease of description, and should not constitute a particular limitation. Features in the manners, categories, cases, and embodiments may be combined with each other provided that the features are logical.

It should be further understood that the foregoing content is merely intended to help a person skilled in the art better understand embodiments of this application, instead of limiting the scope of embodiments of this application. A person skilled in the art may make various modifications, variations, combinations, or the like based on the foregoing content. A solution obtained through such a modification, variation, or combination also falls within the scope of embodiments of this application.

It should be further understood that the foregoing content descriptions focus on differences between embodiments. For same or similar parts, refer to each other. For brevity, details are not described herein again.

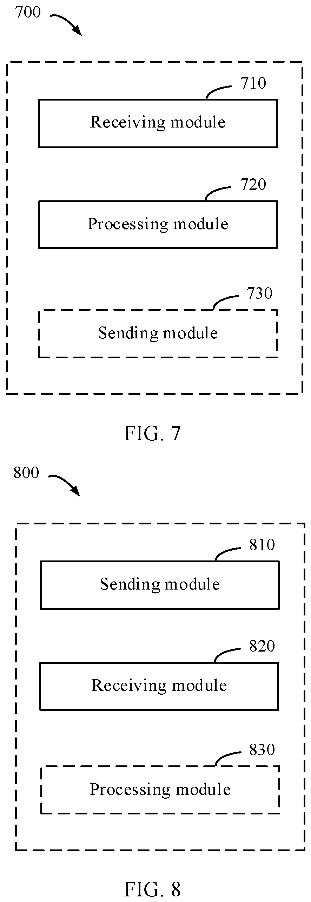

FIG. 7 is a block diagram of a communication apparatus 700 according to some embodiments of this application. The apparatus 700 may be implemented as the terminal 220 shown in FIG. 2, or may be implemented as a part (for example, a chip) of the terminal 220. This is not limited in this application. As shown in FIG. 7, the apparatus 700 includes a receiving module 710 and a processing module 720. Optionally, the apparatus may further include a sending module 730.

The receiving module 710 is configured to receive random access signaling from a base station, where the received random access signaling includes an initial received power at which the base station receives a random access preamble sequence. The processing module 720 is configured to determine, based on the initial received power, a total target received power at which the base station receives the random access preamble sequence. The processing module 720 is further configured to determine N transmit powers for N transmissions of the random access preamble sequence on M beams. The N transmit powers correspond to N first powers, the N first powers are obtained by a terminal device by subtracting path losses from the N transmit powers, a sum of the N first powers is not less than a total target received power, the M beams include a first beam and a second beam, and signal reception strength of the communication apparatus 700 on the first beam is different from signal reception strength of the communication apparatus 700 on the second beam, where M is an integer greater than or equal to 2, and N is an integer greater than or equal to M.

In some embodiments, the processing module 720 is configured to determine, based on a transmission quantity on each of the M beams, an equivalent transmission quantity on each of the M beams, where a sum of transmission quantities on the M beams is N, and a sum of equivalent transmission quantities on all of the M beams is less than N.

For example, the processing module 720 is configured to determine a first transmit power for a single transmission of the random access preamble sequence on the first beam based on the total target received power, a total equivalent transmission quantity on the M beams, a first equivalent transmission quantity on the first beam, and a path loss on the first beam. A second transmit power determining submodule is configured to determine a second transmit power for a single transmission of the random access preamble sequence on the second beam based on the first transmit power, a path loss on the second beam, the first equivalent transmission quantity, a second equivalent transmission quantity on the second beam, and a transmission quantity on the second beam.

Optionally, the processing module 720 is configured to: determine a strength ratio of signal reception strength on the second beam to signal reception strength on the first beam; and determine the second equivalent transmission quantity based on the transmission quantity on the second beam and the strength ratio.

In some embodiments, the processing module 720 is configured to determine (K+1) beams and K beams in the M beams. A sum of first powers on the K beams is less than the total target received power, and a sum of first powers on the (K+1) beams is greater than or equal to the total target received power. The (K+1) beams are the first (K+1) beams in descending order of signal reception strength in the M beams, and the K beams are the first K beams in descending order of signal reception strength in the M beams; or the (K+1) beams are the first (K+1) beams in ascending order of signal reception strength in the M beams, and the K beams are the first K beams in ascending order of signal reception strength in the M beams. A single transmit power on each of the K beams is a maximum transmit power of the apparatus 700, and a first power on a $(K+1)^{th}$ beam is obtained by subtracting the first powers on the K beams from the total target received power, where the $(K+1)^{th}$ beam is a beam other than the K beams in the (K+1) beams.

For example, the processing module 720 is configured to determine a single transmit power on the $(K+1)^{th}$ beam based on the first power on the $(K+1)^{th}$ beam, a transmission quantity of the random access preamble sequence on the $(K+1)^{th}$ beam, and a path loss on the $(K+1)^{th}$ beam.

In some embodiments, the apparatus 700 may further include a sending module 730, which is configured to separately send the random access preamble sequence on the M beams by using the N transmit powers.

The apparatus 700 in FIG. 7 can be configured to implement the processes described for the terminal 220 in FIG. 3. For brevity, details are not described herein again.

FIG. 8 is a block diagram of a communication apparatus 800 according to some embodiments of this application. The apparatus 800 may be implemented as the base station 210 shown in FIG. 2, or may be implemented as a part (for example, a chip) of the base station 210. This is not limited in this application. As shown in FIG. 8, the apparatus 800 includes a sending module 810 and a receiving module 820, and optionally, may further include a processing module 830.

The sending module 810 is configured to transmit random access signaling to a terminal, where the random access signaling includes an initial received power at which the communication apparatus 800 receives a random access preamble sequence. The receiving module 820 is configured to receive, from the terminal, N transmissions of the random access preamble sequence on M beams, where M is an integer greater than or equal to 2, and N is an integer greater than or equal to M. Optionally, the random access preamble sequence for the N transmissions is transmitted by the terminal on the M beams using N transmit powers. The N transmit powers correspond to N first powers, the N first powers are obtained by a terminal device by subtracting path losses from the N transmit powers, and a sum of the N first powers is not less than a total target received power that is determined by the terminal based on the initial received power. The M beams include a first beam and a second beam, and signal reception strength of the terminal on the first beam is different from signal reception strength of the terminal on the second beam.

In some embodiments, the processing module 830 may be configured to determine a combined power for the N transmissions, where the combined power is not less than the total target received power at which the apparatus 800 receives the random access preamble sequence.

The apparatus 800 in FIG. 8 can be configured to implement the processes described for the base station 210 in FIG. 3. For brevity, details are not described herein again.

Division into the modules or the units in this embodiment of this application is an example, is merely logical function division, and may be other division during actual implementation. In addition, functional units in the disclosed embodiment may be integrated into one unit, each of the units may exist alone physically, or two or more units may be integrated into one unit. The integrated unit may be implemented in a form of hardware, or may be implemented in a form of a software functional unit.

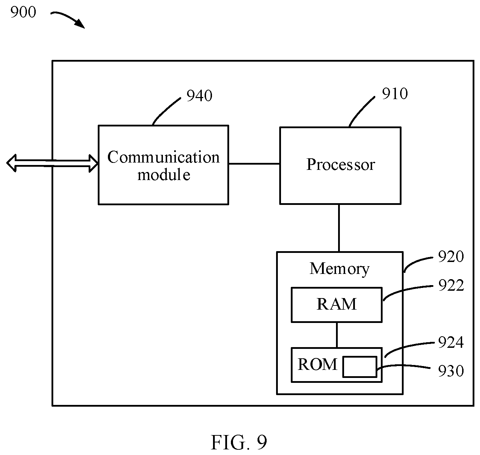

FIG. 9 is a block diagram of an example device 900 that can be configured to implement an embodiment of this application. The device 900 may be implemented or included in the terminal 220 in FIG. 2, or the device 900 may be implemented or included in the base station 210 in FIG. 2.

As shown in FIG. 9, the device 900 includes one or more processors 910, one or more memories 920 coupled to the processor 910, and a communication module 940 coupled to the processor 910.

The communication module 940 may be configured for bidirectional communication. The communication module 940 may have at least one communication interface for communication. The communication interface may include any interface necessary for communicating with another device.

The processor 910 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 900 may have a plurality of processors, such as an application-specific integrated circuit chip, which in time belongs to a clock synchronized with a main processor.

The memory 920 may include one or more non-volatile memories and one or more volatile memories. An example of the non-volatile memory includes but is not limited to at least one of the following: a read-only memory (Read-Only Memory, ROM) 924, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. An example of the volatile memory includes but is not limited to at least one of the following: a random access memory (Random Access Memory, RAM) 922, or another volatile memory that does not persist for duration of a power failure.

The computer program 930 includes computer-executable instructions performed by the associative processor 910. The program 930 may be stored in the ROM 924. The processor 910 may perform any suitable actions and processing by loading the program 930 into the RAM 922.

Embodiments of this application may be implemented through the program 930, so that the device 900 may perform any process discussed with reference to FIG. 3. Embodiments of this application may alternatively be implemented using hardware or a combination of software and hardware.

The program 930 may be tangibly included in a computer-readable medium, and the computer-readable medium may be included in the device 900 (for example, in the memory 920) or another storage device that is accessible by the device 900. The program 930 may be loaded from the computer-readable medium to the RAM 922 for execution. The computer-readable medium may include any type of tangible non-volatile memory, for example, a ROM, an EPROM, a flash memory, a hard disk, a CD, a DVD, or the like.

In some embodiments, the communication module 940 in the device 900 may be implemented as a transmitter and a receiver (or a transceiver), and may be configured to transmit/receive a plurality of TCIs, at least one message, capability information, and the like. In addition, the device 900 may further include one or more of a scheduler, a controller, and a radio frequency/an antenna. Details are not described in this application.

For example, the device 900 in FIG. 9 may be implemented as an electronic device, or may be implemented as a chip or a chip system in the electronic device. This is not limited in embodiments of this application.

An embodiment of this application further provides a chip. The chip may include an input interface, an output interface, and a processing circuit. In this embodiment of this application, the input interface and the output interface may complete signaling or data interaction, and the processing circuit may complete generation and processing of the signaling or data information.

An embodiment of this application further provides a chip system, including a processor, configured to support a computing device in implementing the function in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete component.

An embodiment of this application further provides a processor, configured to be coupled to a memory. The memory stores instructions. When the processor runs the instructions, the processor is enabled to perform the method and function in any one of the foregoing embodiments.

An embodiment of this application further provides a computer program or a computer program product including instructions. When the computer program or the computer program product runs on a computer, the computer is enabled to perform the method and function in any one of the foregoing embodiments.

An embodiment of this application further provides a computer-readable storage medium, having computer instructions stored thereon. When a processor runs the instructions, the processor is enabled to perform the method and function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although aspects of embodiments of this application are shown and described as block diagrams or flowcharts, or represented by some other illustrations, it should be understood that the blocks, apparatuses, systems, technologies, or methods described in this specification may be implemented as, for example, non-limiting examples, hardware, software, firmware, dedicated circuits or logic, general-purpose hardware, controllers, other computing devices, or a combination thereof.

This application further provides at least one computer program product tangibly stored on a non-transitory computer-readable storage medium. The computer program product includes computer-executable instructions, such as instructions included in a program module, which are executed in a device on a real or virtual target processor to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be locally located and located in a remote storage medium.

Computer program code for implementing the method in this application may be written in one or more programming languages. The computer program code may be provided for a processor of a general-purpose computer, a dedicated computer, or another programmable data processing apparatus, so that when the program code is executed by the computer or the another programmable data processing apparatus, functions/operations specified in the flowcharts and/or block diagrams are implemented. The program code may be executed entirely on a computer, partly on a computer, as an independent software package, partly on a computer and partly on a remote computer, or entirely on a remote computer or a server.

In the context of this application, the computer program code or related data may be carried in any proper carrier, so that the device, the apparatus, or the processor can perform various processing and operations described above. For example, the carrier includes a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, apparatus, or device. The computer-readable medium may be a computer-readable signal medium or a computer-readable storage medium. The computer-readable medium may include but is not limited to an electronic, magnetic, optical, electromagnetic, infrared, or semiconductor system, apparatus or device, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the methods in this application are described in a particular order in the accompanying drawings, this does not require or imply that these operations need to be performed in the particular order or that all of the shown operations need to be performed to achieve a desired result. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that features and functions of two or more apparatuses according to this application may be specific in one apparatus. Instead, features and functions of one apparatus described above may be further specific in a plurality of apparatuses.

The foregoing has described the implementations of this application. The foregoing descriptions are examples, are not exhaustive, and are not limited to the disclosed implementations. Without departing from the scope of the described implementations, many modifications and variations are apparent to a person of ordinary skill in the art. Selection of the terms used in this specification is intended to well explain principles of the implementations, actual applications, or improvements to technologies in the market, or to enable another person of ordinary skill in the art to understand the implementations disclosed in this specification.

**Claims**

1. A communication method, comprising:

   receiving random access signaling from a network device, wherein the received random access signaling comprises an initial received power at which the network device receives a random access preamble sequence;
   determining, based on the initial received power, a total target received power at which the network device receives the random access preamble sequence; and
   determining N transmit powers for N transmissions of the random access preamble sequence on M beams, wherein the N transmit powers correspond to N first powers, the N first powers are determined based on the N transmit powers and path losses on the M beams, a sum of the N first powers is not less than the total target received power, the M beams comprise a first beam and a second beam, and signal reception strength of a terminal device on the first beam is different from signal reception strength of the terminal device on the second beam, wherein M is an integer greater than or equal to 2, and N is an integer greater than or equal to M.

2. The method according to claim 1, wherein the method further comprises:
   determining an equivalent transmission quantity on each of the M beams based on a transmission quantity on each of the M beams, wherein a sum of the transmission quantities on the M beams is N, and a sum of the equivalent transmission quantities on the M beams is less than N.

3. The method according to claim 1 or 2, wherein the determining N transmit powers for N transmissions of the random access preamble sequence on M beams comprises:

   determining a first transmit power for a single transmission of the random access preamble sequence on the first beam based on the total target received power, a total equivalent transmission quantity on the M beams, a first equivalent transmission quantity on the first beam, and a path loss on the first beam; and
   determining a second transmit power for a single transmission of the random access preamble sequence on the second beam based on the first transmit power, a path loss on the second beam, a second equivalent transmission quantity on the second beam, and a transmission quantity on the second beam.

4. The method according to claim 3, wherein the method further comprises:

   determining a strength ratio of the signal reception strength on the second beam to the signal reception strength on the first beam; and

determining the second equivalent transmission quantity based on the transmission quantity on the second beam and the strength ratio.

5. The method according to claim 1, wherein the determining N transmit powers for N transmissions of the random access preamble sequence on M beams comprises:

determining (K+1) beams and K beams in the M beams, wherein a sum of first powers on the K beams is less than the total target received power, and a sum of first powers on the (K+1) beams is greater than or equal to the total target received power, wherein
the (K+1) beams are the first (K+1) beams in descending order of signal reception strength in the M beams, and the K beams are the first K beams in descending order of signal reception strength in the M beams, or the (K+1) beams are the first (K+1) beams in ascending order of signal reception strength in the M beams, and the K beams are the first K beams in ascending order of signal reception strength in the M beams; and a single transmit power on each of the K beams is a maximum transmit power of the terminal device, a first power on a $(K+1)^{th}$ beam is obtained by subtracting the first powers on the K beams from the total target received power, and the $(K+1)^{th}$ beam is a beam other than the K beams in the (K+1) beams.

6. The method according to claim 5, wherein the method further comprises:
determining a single transmit power on the $(K+1)^{th}$ beam based on the first power on the $(K+1)^{th}$ beam, a path loss on the $(K+1)^{th}$ beam, and a transmission quantity of the random access preamble sequence on the $(K+1)^{th}$ beam.

7. The method according to any one of claims 1 to 6, wherein the method further comprises:
separately sending the random access preamble sequence on the M beams by using the N transmit powers.

8. A communication method, comprising:

sending random access signaling to a terminal device, wherein the random access signaling comprises an initial received power at which a network device receives a random access preamble sequence; and
receiving N transmissions of the random access sequence on M beams from the terminal device, wherein M is an integer greater than or equal to 2, and N is an integer greater than or equal to M.

9. The method according to claim 8, wherein the method further comprises:
determining, by the network device, a combined power for the N transmissions, wherein the combined power is not less than a total target received power at which the network device receives the random access preamble sequence.

10. A communication apparatus, wherein the apparatus comprises:

a receiving module, configured to receive random access signaling from a network device, wherein the received random access signaling comprises an initial received power at which the network device receives a random access preamble sequence; and
a processing module, configured to determine, based on the initial received power, a total target received power at which the network device receives the random access preamble sequence, wherein
the processing module is further configured to determine N transmit powers for N transmissions of the random access preamble sequence on M beams, wherein the N transmit powers correspond to N first powers, the N first powers are determined based on the N transmit powers and path losses on the M beams, a sum of the N first powers is not less than the total target received power, the M beams comprise a first beam and a second beam, and signal reception strength of the communication apparatus on the first beam is different from signal reception strength of the communication apparatus on the second beam, wherein M is an integer greater than or equal to 2, and N is an integer greater than or equal to M.

11. The apparatus according to claim 10, wherein
the processing module is further configured to determine an equivalent transmission quantity on each of the M beams based on a transmission quantity on each of the M beams, wherein a sum of the transmission quantities on the M beams is N, and a sum of the equivalent transmission quantities on the M beams is less than N.

12. The apparatus according to claim 10 or 11, wherein

the processing module is further configured to determine a first transmit power for a single transmission of the random access preamble sequence on the first beam based on the total target received power, a total equivalent transmission quantity on the M beams, a first equivalent transmission quantity on the first beam, and a path loss on the first beam; and
the processing module is further configured to determine a second transmit power for a single transmission of the random access preamble sequence on the second beam based on the first transmit power, a path loss on the second beam, the first equivalent transmission quantity, a second equivalent transmission quantity on the second beam, and a transmission quantity on the second beam.

13. The apparatus according to claim 12, wherein the processing module is further configured to: determine a strength ratio of the signal reception strength on the second beam to the signal reception strength on the first beam; and determine the second equivalent transmission quantity based on the transmission quantity on the second beam and the strength ratio.

14. The apparatus according to claim 10, wherein

the processing module is further configured to determine (K+1) beams and K beams in the M beams, wherein a sum of first powers on the K beams is less than the total target received power, and a sum of first powers on the (K+1) beams is greater than or equal to the total target received power, wherein
the (K+1) beams are the first (K+1) beams in descending order of signal reception strength in the M beams, and the K beams are the first K beams in descending order of signal reception strength in the M beams, or
the (K+1) beams are the first (K+1) beams in ascending order of signal reception strength in the M beams, and the K beams are the first K beams in ascending order of signal reception strength in the M beams; and
a single transmit power on each of the K beams is a maximum transmit power of the apparatus, a first power on a $(K+1)^{th}$ beam is obtained by subtracting the first powers on the K beams from the total target received power, and the $(K+1)^{th}$ beam is a beam other than the K beams in the (K+1) beams.

15. The apparatus according to claim 14, wherein
the processing module is further configured to determine a single transmit power on the $(K+1)^{th}$ beam based on the first power on the $(K+1)^{th}$ beam, path losses on the (K+1) beams, and a transmission quantity of the random access preamble sequence on the $(K+1)^{th}$ beam.

16. The apparatus according to any one of claims 10 to 15, further comprising:
a sending module, configured to separately send the random access preamble sequence on the M beams by using the N transmit powers.

17. A communication apparatus, comprising:

a sending module, configured to send random access signaling to a terminal device, wherein the random access signaling comprises an initial received power at which the communication apparatus receives a random access preamble sequence; and
a receiving module, configured to receive N transmissions of the random access preamble sequence on M beams from the terminal device, wherein M is an integer greater than or equal to 2, and N is an integer greater than or equal to M.

18. The apparatus according to claim 17, further comprising:
a processing module, configured to determine a combined power for the N transmissions, wherein the combined power is not less than a total target received power at which the communication apparatus receives the random access preamble sequence.

19. A computer-readable storage medium, storing a computer program, wherein when the program is executed by a processor, the method according to any one of claims 1 to 9 is implemented.

20. A computer program product, storing a computer program, wherein when the program is executed by a processor, the method according to any one of claims 1 to 9 is implemented.

21. A chip, comprising a processing circuit, configured to perform the method according to any one of claims 1 to 9.

100

102

Base station

101

Terminal

Random access preamble (Msg1) 110

Random access response (Msg2) 120

Scheduled data transmission (Msg3) 130

Contention resolution message (Msg4) 140

FIG. 1

200

210

220-2

220-1

FIG. 2

FIG. 3

FIG. 4

Power increment of 4.7 dB

Frequency
domain          Power increment of 3 dB          Power increment of 1.7 dB

Power gain 3 dB          Power gain 2 dB          Time
domain

FIG. 5

Power increment of 4.7 dB

Frequency
domain          Power increment of 2.7 dB          Power increment of 2 dB

Power gain 3 dB          Power gain 2 dB          Time
domain

FIG. 6

700

710

Receiving module

720

Processing module

730

Sending module

FIG. 7

800

810

Sending module

820

Receiving module

830

Processing module

FIG. 8

900

940                     910

Communication          Processor
module

Memory                 920

RAM                    922

ROM                    924
                       930

FIG. 9

## INTERNATIONAL SEARCH REPORT

| International application No. |
| --- |
| **PCT/CN2023/121115** |

### A. CLASSIFICATION OF SUBJECT MATTER

H04W74/08(2024.01)i

According to International Patent Classification (IPC) or to both national classification and IPC

### B. FIELDS SEARCHED

Minimum documentation searched (classification system followed by classification symbols)

IPC:H04W, H04L

Documentation searched other than minimum documentation to the extent that such documents are included in the fields searched

Electronic data base consulted during the international search (name of data base and, where practicable, search terms used)

CNTXT, ENTXTC, DWPI, CNKI, 3GPP: 随机接入, 前导, 波束, 接收功率, 发射功率, 目标, 合并, 总和, 爬坡, 重复, 路损, 成功, random access, preamble, beam, received power, transmission power, target, combine, total, ramp, repeat, path loss, success

### C. DOCUMENTS CONSIDERED TO BE RELEVANT

| Category* | Citation of document, with indication, where appropriate, of the relevant passages | Relevant to claim No. |
| --- | --- | --- |
| X | CN 110351814 A (HUAWEI TECHNOLOGIES CO., LTD.) 18 October 2019 (2019-10-18) description, paragraphs 44, 45, 52-69, and 107-145 | 8, 17, 19-21 |
| X | US 2020154375 A1 (NEC CORP.) 14 May 2020 (2020-05-14) description, paragraphs 43-66 | 8, 17, 19-21 |
| A | CN 109587814 A (ZTE CORP.) 05 April 2019 (2019-04-05) entire document | 1-21 |
| A | US 2018324716 A1 (OFINNO TECHNOLOGIES, LLC) 08 November 2018 (2018-11-08) entire document | 1-21 |
| A | Samsung R amp; amp; D Institute India. "R2-1707680 "Beamformed Random Access: Power Ramping Aspects""<br>*3GPP tsg_ran\WG2_RL2*, No. TSGR2_99, 11 August 2017 (2017-08-11),<br>entire document | 1-21 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 December 2023** | **20 December 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121115**

| Patent document cited in search report | | | Publication date (day/month/year) | Patent family member(s) | | | Publication date (day/month/year) |
|---|---|---|---|---|---|---|---|
| CN | 110351814 | A | 18 October 2019 | WO | 2019192336 | A1 | 10 October 2019 |
| US | 2020154375 | A1 | 14 May 2020 | WO | 2018227451 | A1 | 20 December 2018 |
| | | | | US | 11647471 | B2 | 09 May 2023 |
| CN | 109587814 | A | 05 April 2019 | WO | 2019062676 | A1 | 04 April 2019 |
| US | 2018324716 | A1 | 08 November 2018 | US | 2020178185 | A1 | 04 June 2020 |
| | | | | US | 11051256 | B2 | 29 June 2021 |
| | | | | US | 10568050 | B2 | 18 February 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211201054